# EUROPEAN PATENT SPECIFICATION

(11) **EP 3 144 208 B1**
(45) Date of publication and mention of the grant of the patent: **22.08.2018**
(21) Application number: 16185621.6
(22) Date of filing: 25.08.2016
(51) Int. Cl.: B62K 11/04, B62K 19/30

(54) **LOWER PART STRUCTURE FOR SADDLE-TYPE VEHICLE**
UNTERTEILSTRUKTUR FÜR SATTELFAHRZEUG
STRUCTURE DE PARTIE INFÉRIEURE POUR VÉHICULE DE TYPE À ENFOURCHER

(30) Priority: 11.09.2015 JP 2015179508
(43) Date of publication of application: 22.03.2017
(73) Proprietor: HONDA MOTOR CO., LTD., Tokyo 107-8556 (JP)
(72) Inventor: KITAYAMA, Kyosuke, SAITAMA, 351-0193 (JP); KITO, Genichi, SAITAMA, 351-0193 (JP); NAKAZAWA, Tetsuya, SAITAMA, 351-0193 (JP)
(74) Representative: Fioravanti, Corrado

(56) References cited:
- EP-A1- 0 949 407
- US-A1- 2014 209 401

## Description

The present invention relates to a lower part structure for a saddle-type vehicle.
In the past, there has been known a saddle-type vehicle in which a plurality of exhaust pipes extending from respective exhaust ports of a multi-cylinder engine pass on the lower side of a vehicle body and are connected to mufflers (see, for example, Japanese Patent Laid-Open No. 2005-220814).
All or part of the exhaust pipes extending from the exhaust ports collect to form a collecting part, from which exhaust pipes extend separately to the left and right sides and are connected individually to two mufflers provided on the left and right sides. In the collecting part, a catalyst device for clarification of the exhaust gas is provided.
In the saddle-type vehicle disclosed in Patent Document 1, when a collecting part where all the exhaust pipes collect is provided, the catalyst device and the collecting part become large in size, so that it is difficult to lay out them, and the collecting part is liable to be conspicuous. Even in the case where a collecting part where part of the exhaust pipes collect is provided, the collecting part becomes large in diameter and therefore conspicuous. Further, since the collecting part is disposed on a laterally outer side as compared with the centre of the vehicle width, it is difficult to protect the collecting part.

The document US2014/0209401A1 represents the closest prior art and shows a vehicle according to the preamble of claim 1.

In view of the foregoing and in consideration of the degree of freedom in designing a layout of components of a vehicle body lower part, there is a need for a lower part structure for a saddle-type vehicle in which a plurality of exhaust pipes are so shaped as not to have a collecting part where all the exhaust pipes collect and by which the vehicle body lower part can be protected and be enhanced in external appearance.
It is an object of the present invention to provide a lower part structure for a saddle-type vehicle by which the degree of freedom in designing a layout of components can be increased and a vehicle body lower part can be protected and be enhanced in external appearance.

In order to solve the above problem, according to the present invention, there is provided a lower part structure for a saddle-type vehicle, having exhaust pipes (81) extending from exhaust ports of a multi-cylinder engine (51), each of the exhaust pipes (81) passing on a lower side of a vehicle body and connected to a muffler (82), wherein the number of the exhaust pipes (81) connected to the exhaust ports is four, collecting parts (83) where two left ones or two right ones of the exhaust pipes (81) collect are provided respectively on left and right sides, and a catalyst device (93) is disposed in each of the collecting parts (83). Also, a pair of left and right down frames (26) are provided to separately extend to left and right sides from a head pipe (21) and extend downward, the two left ones and the two right ones of the exhaust pipes (81) are provided in such a manner that the pair of left and right down frames (26) are each interposed between the two exhaust pipes (81) in plan view, the collecting parts (83) are disposed on transverse-directionally inner sides as compared to the pair of left and right down frames (26), and the exhaust pipes (81) located on outer sides of the down frames (26) are formed with curved parts (85c, 87c) of which only portions connected to the collecting parts (83) are curved to transverse-directionally inner sides, and protectors (96) are provided in such a manner as to cover the curved parts (85c, 87c) from lateral sides.

In the above configuration, the protector (96) may have a shape along an outer circumferential surface shape of the exhaust pipe (81) located on an outer side of the down frame (26), and be provided in such a manner as to interconnect the exhaust pipes (81) communicating with the curved parts (85c, 87c) located on front and rear sides of the collecting part (83).

In addition, in the above configuration, the down frames (26) may be provided with a pair of left and right riser parts (26c) rising toward seat rails (24), and plate-shaped parts (27) raised upward may be provided at lower portions of the riser parts (26c).

Besides, in the above configuration, a pivot shaft (36) of a swing arm (14) supporting a rear wheel (17) may be provided on the plate-shaped parts (27).

In addition, in the above configuration, the plate-shaped parts (27) may be provided with rider's footrests (73).

Besides, in the above configuration, the two exhaust pipes (81) may be connected to a rear portion of each of the pair of left and right collecting parts (83), the mufflers (82) may be connected individually to the two exhaust pipes (81), and the mufflers (82) may be disposed in the state of being aligned in a vertical direction.

In addition, in the above configuration, the collecting part (83) may have an oblong outer cross-sectional shape, and a major axis (83b) of the oblong shape may be inclined to be higher on a transverse-directionally outer side than on a transverse-directionally inner side.

Besides, in the above configuration, the protector (96) may be formed to be U-shaped in cross section and be disposed on an extension line of the major axis (83b) of the collecting part (83), and an opening portion (96b) of the protector (96) may be oriented toward the collecting part (83).

According to the present invention, the number of the exhaust pipes connected to the exhaust ports is four, collecting parts where two left ones or two right ones of the exhaust pipes collect are provided respectively on left and right sides, and a catalyst device is disposed in each of the collecting parts. Also, a pair of left and right down frames are provided to separately extend to left and right sides from a head pipe and extend downward, the two left ones and the two right ones of the exhaust pipes are provided in such a manner that the pair of left and right down frames are each interposed between the two exhaust pipes in plan view, the collecting parts are disposed on transverse-directionally inner sides as compared to the pair of left and right down frames, and the exhaust pipes located on outer sides of the down frames are formed with curved parts of which only portions connected to the collecting parts are curved to transverse-directionally inner sides, and protectors are provided in such a manner as to cover the curved parts from lateral sides. Therefore, a collecting part where all the exhaust pipes collect is abolished, and the collecting parts are provided individually on the left and right sides, with the catalyst device disposed in each of the collecting parts, whereby the degree of freedom in designing a layout of components of the vehicle body lower part can be enhanced. At the same time, with the collecting parts disposed on the transverse-directionally inner sides as compared to the down frames, the collecting parts can be protected and can be disposed to be difficultly visible. In addition, with the curved parts covered with the protectors from lateral sides, the collecting parts in the vehicle body lower part can be protected and the external appearance can be enhanced more assuredly.

Besides, the protector has a shape along an outer circumferential surface shape of the exhaust pipe located on an outer side of the down frame, and is provided in such a manner as to interconnect the exhaust pipes communicating with the curved parts located on front and rear sides of the collecting part. With this configuration, the curved parts connected while being curved to the collecting parts can be protected by the protectors, to provide an appearance as if there were exhaust pipes extending continuously in the longitudinal vehicle direction. At the same time, the curved parts and the collecting parts located on the inner sides of the protectors can be covered, which contributes to enhancement of external appearance.

In addition, since the down frames are provided with a pair of left and right riser parts rising toward seat rails and plate-shaped parts raised upward are provided at lower portions of the riser parts, the component parts located on the inner sides of the plate-shaped parts can be covered with the plate-shaped parts, whereby external appearance can be enhanced.

Besides, since a pivot shaft of a swing arm supporting a rear wheel is provided on the plate-shaped parts, the down frames are provided with the plate-shaped parts to form high-rigidity parts, and the rear wheel can be supported by the high-rigidity parts through the swing arm. As a result, running performance of the vehicle can be enhanced.

In addition, since the plate-shaped parts are provided with rider's footrests, the plate shape of the plate-shaped parts enables easy processing for providing the footrests, so that the footrests can be attached easily.

Besides, the two exhaust pipes are connected to a rear portion of each of the pair of left and right collecting parts, the mufflers are connected individually to the two exhaust pipes, and the mufflers are disposed in the state of being aligned in a vertical direction. With this configuration, a total of four mufflers on the left and right sides can be laid out efficiently on the vehicle body through the collecting parts.

In addition, the collecting part has an oblong outer cross-sectional shape, and a major axis of the oblong shape is inclined to be higher on a transverse-directionally outer side than on a transverse-directionally inner side. Therefore, with the collecting part formed to be oblong, the catalyst device can be made larger while restricting the vertical size of the collecting part. Consequently, a minimum road clearance of the vehicle can be secured, and exhaust gas clarification performance can be enhanced. Further, since the major axis of the collecting part is inclined, the collecting part can be made inconspicuous when the vehicle body lower part is viewed from an oblique lateral and upper side of the vehicle body.

Besides, the protector is formed to be U-shaped in cross section and disposed on an extension line of the major axis of the collecting part, and an opening portion of the protector is oriented toward the collecting part. Therefore, with the protector disposed on the extension line of the major axis of the collecting part, it is ensured that the collecting part is hidden behind the protector when the vehicle body lower part is viewed from an oblique lateral and upper side, whereby external appearance can be enhanced.

Further features and advantages of the present invention will become apparent from the following description in conjunction with the attached drawings, wherein:
FIG. 1 is a right side view of a motorcycle provided with a lower part structure according to the present invention;
FIG. 2 is a right side view depicting a body frame and an exhaust system;
FIG. 3 illustrates perspective views depicting the layout and structure of the exhaust system, wherein FIG. 3A illustrates positional relation between a lower part of the body frame and the exhaust system, and FIG. 3B illustrates the structure of the exhaust system;
FIG. 4 is a plan view of the exhaust system;
FIG. 5 illustrates positional relations between the body frame and the exhaust system, wherein FIG. 5A is a plan view, and FIG. 5B is a bottom view;
FIG. 6 is a front view depicting the body frame and the exhaust system;
FIG. 7 illustrates sectional views depicting the exhaust system, wherein FIG. 7A is a sectional view taken along line VA-VA of FIG. 5B, FIG. 7B is a sectional view taken along line VB-VB of FIG. 5B, and FIG. 7B is a sectional view taken along line VC-VC of FIG. 5B; and
FIG. 8 illustrates a protector, wherein FIG. 8A is a perspective view of the protector, and FIG. 8B is a sectional view taken alone line VIII-VIII of FIG. 4.

An embodiment of the present invention will be described below, referring to the drawings. Note that in the description, the directions such as forward, rearward, leftward, rightward, upward, and downward directions are the same as the directions with respect to the vehicle body, unless otherwise specified. In addition, symbol FR in the drawings indicates the vehicle body front side, symbol UP indicates the vehicle body upper side, and symbol LH indicates the vehicle body left-hand side.

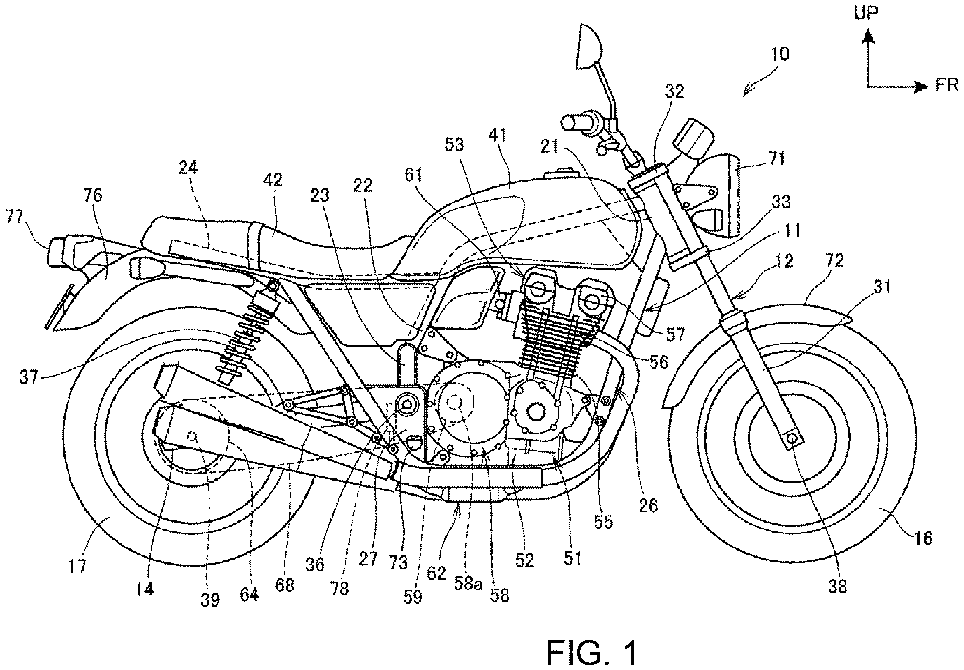

FIG. 1 is a right side view of a motorcycle 10 provided with a lower part structure according to the present invention.

The motorcycle 10 is a saddle-type vehicle wherein a front fork 12 is provided at a front end portion of a body frame 11, a swing arm 14 is provided at a lower portion of the body frame 11, a front wheel 16 is supported on lower end portions of the front fork 12, and a rear wheel 17 is supported on a rear end portion of the swing arm 14.

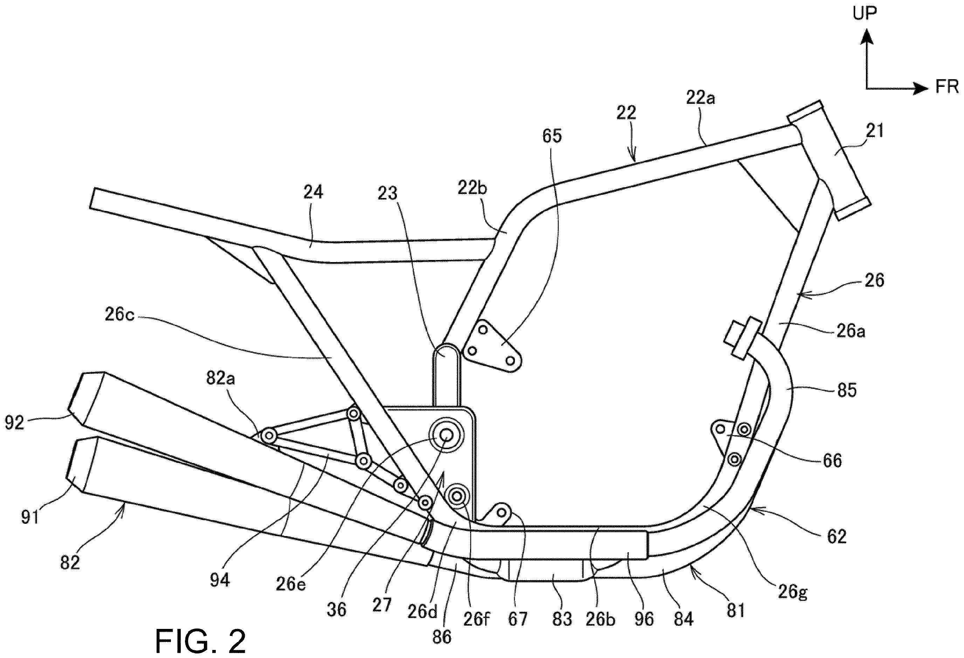

The body frame 11 includes a head pipe 21, a pair of left and right main frames 22, a pair of left and right centre frames 23, a pair of left and right seat rails 24 (see FIG. 2), a pair of left and right down frames 26, and a pair of left and right pivot plates 27.

The head pipe 21 constitutes a front end portion of the body frame 11, and the front fork 12 is supported on the head pipe 21 in such a manner as to be steerable to the left and the right. The main frames 22 extend obliquely rearward and downward from an upper portion of the head pipe 21. The centre frames 23 are in connection with lower ends of the main frames 22, and extend downward. The seat rails 24 support a seat 42. The down frames 26 in connection with the head pipe 21 extend obliquely rearward and downward on a lower side of the main frames 22, then extend rearward, and extend obliquely rearward and upward. A pivot shaft 36 extending in the transverse direction is fixed to the pivot plates 27, and a front end portion of the swing arm 14 is supported on the pivot shaft 36 in a vertically swingable manner.

The front fork 12 includes a pair of left and right telescopic fork tubes 31, a top bridge 32 and a bottom bridge 33 that interconnect the left and right fork tubes 31, and a steering stem (not depicted) vertically interconnecting the top bridge 32 and the bottom bridge 33. The steering stem is rotatably inserted in the head pipe 21. The front wheel 16 is supported on lower end portions of the front fork 12 through an axle 38.

A lower end portion of a rear cushion unit 37 is connected to a rear end portion of the swing arm 14, and the rear wheel 17 is supported on the rear end portion of the swing arm 14 through an axle 39. An upper end of the rear cushion unit 37 is connected to the body frame 11 beneath the seat 42.

A fuel tank 41 disposed on the rear side of the head pipe 21 and the seat 42 disposed on the rear side of the fuel tank 41 are supported on an upper portion of the body frame 11.

A multi-cylinder engine 51 is disposed in a space surrounded by the body frame 11, under the fuel tank 41.

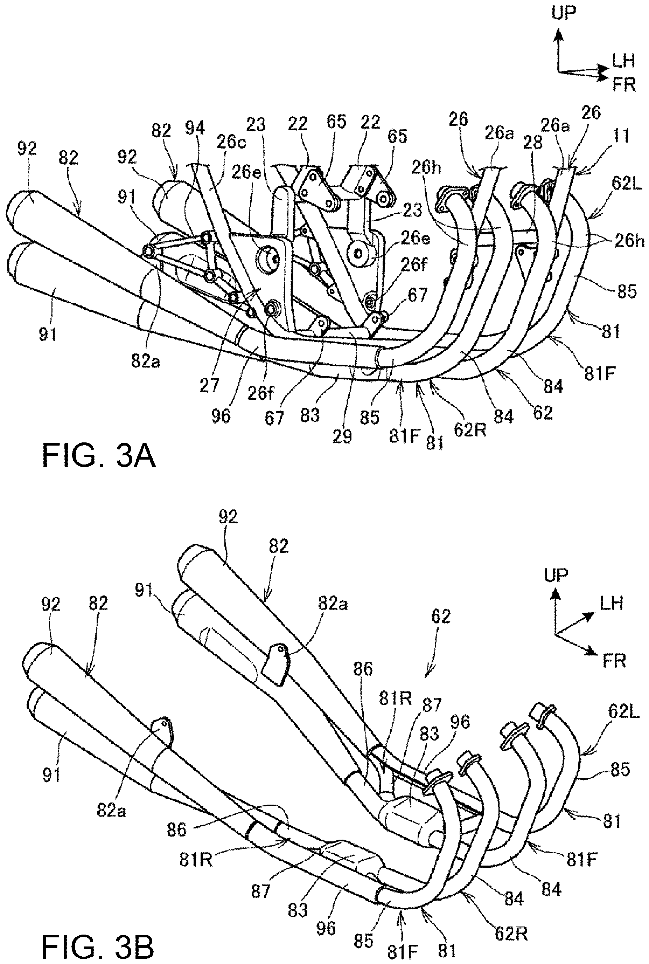

The engine 51 is supported by the main frames 22, the down frames 26, and a rear part cross pipe 29 (see FIG. 3A). The engine 51 includes a crankcase 52, and a cylinder part 53 raised from a front portion of the crankcase 52. The cylinder part 53 includes a cylinder block 55, a cylinder head 56, and a head cover 57 disposed in this order from the crankcase 52 side. At a rear portion of the crankcase 52, a transmission 58 is provided in an integral manner. Note that symbol 58a denotes an output shaft possessed by the transmission 58. The output shaft 58a protrudes sideways from a left side surface of the crankcase 52.

An intake system 61 is connected to a plurality of intake ports (not depicted) opening at a rear portion of the cylinder head 56, and an exhaust system 62 is connected to a plurality of exhaust ports (not depicted) opening at a front portion of the cylinder head 56. The intake system 61 includes a throttle body, an air cleaner box and the like. The exhaust system 62 will be described in detail later.

A drive sprocket 59 is attached to a tip portion of the output shaft 58a of the transmission 58, whereas a driven sprocket 64 is integrally attached to a left side portion of the rear wheel 17. A chain 68 is arranged between and around the drive sprocket 59 and the driven sprocket 64. By this, power is transmitted from the transmission 58 to the rear wheel 17 through the chain 68.

Symbol 71 in the drawing denotes a headlight, 72 a front fender covering the upper side of the front wheel 16, 73 a driver's footrest, 76 a rear fender covering the rear wheel 17 from the upper side, 77 a tail lamp, and symbol 78 denotes a front wheel brake master cylinder provided on a transverse-directionally inner side of the pivot plate 27.

FIG. 2 is a right side view depicting the body frame 11 and the exhaust system 62.

The main frame 22 is integrally formed of a front frame part 22a extending obliquely rearward and downward from an upper portion of the head pipe 21, and a rear frame part 22b curved downward from a rear end of the front frame part 22a and extending obliquely rearward and downward. Engine brackets 65 for supporting rear upper portions of the engine 51 (see FIG. 1) are attached individually to lower end portions of the pair of left and right rear frame parts 22b. The seat frames 24 extend rearward from the rear frame parts 22b of the main frames 22.

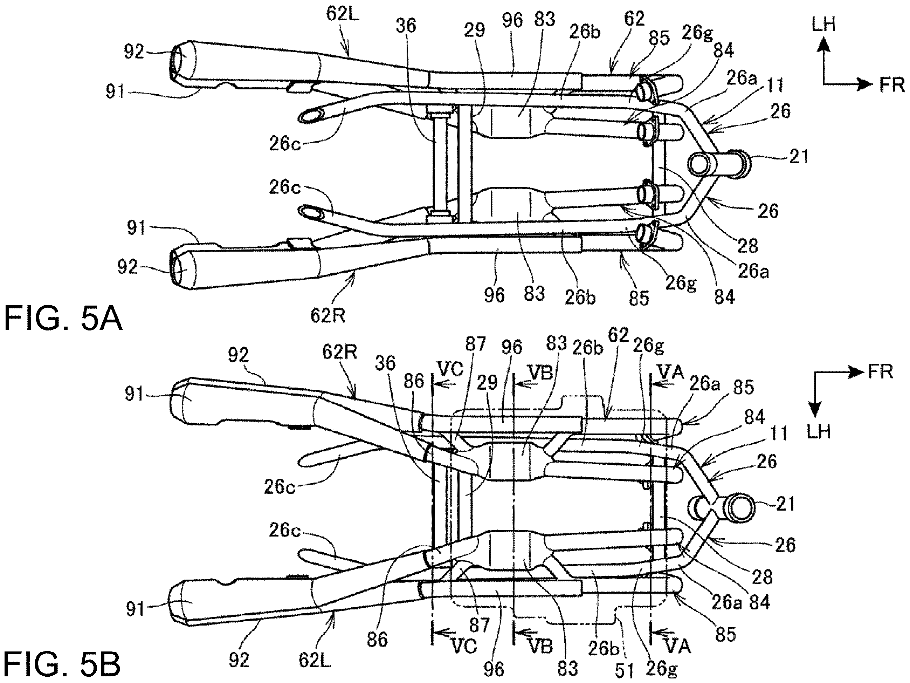

The down frame 26 is integrally formed of a front slant part 26a extending obliquely rearward and downward from the head pipe 21, a horizontal part 26b bent from a rear end portion of the front slant part 26a and extending rearward substantially horizontally, and a rear slant part 26c bent from a rear end of the horizontal part 26b and extending obliquely rearward and upward. A rear end portion of the rear slant part 26c is connected to an intermediate portion in the longitudinal vehicle direction of the seat rail 24. In order to support the engine 51, engine brackets 66 are attached individually to vertical-directionally intermediate portions of the left and right front slant parts 26a, and a pair of left and right engine brackets 67 are attached to a rear part cross pipe 29 (see FIG. 5A).

The pivot plate 27 is a plate-shaped part raised from both the rear slant part 26c of the down frame 26 and a rear curved part 26d provided at a rear end portion of the horizontal part 26b. The centre frame 23 is connected to an upper end of the pivot plate 27. An upper boss part 26e for supporting the pivot shaft 36 is provided at an upper portion of the pivot plate 27, and a lower boss part 26f to which to attach the driver's footrest 73 (see FIG. 1) is provided at a lower portion of the pivot plate 27.

A footrest bracket 94 for supporting a passenger's footrest (not depicted) is attached to a lower portion of the rear slant part 26c of the down frame 26.

The exhaust system 62 includes exhaust pipes 81, and a plurality of mufflers 82 connected to rear end portions of the exhaust pipes 81. The exhaust pipes 81 are composed of a plurality of exhaust pipes (inside front part exhaust pipes 84, outside front part exhaust pipes 85, inside rear part exhaust pipes 86, and outside front part exhaust pipes 87) connected to the cylinder head 56 (see FIG. 1) at their upper end portions, bent downward relative to a front surface of the cylinder head 56, and further extending along the front slant parts 26a, front curved parts 26g (provided at lower ends of the front slant parts 26a), and the horizontal parts 26b of the down frames 26.

Collecting parts 83 are provided at intermediate portions of the exhaust pipes 81, and a catalyst device (not depicted) is disposed in each of the collecting parts 83. In the present embodiment, the layout of the collecting parts 83 is made different from that in the related art, in order to enhance the degree of freedom in designing a layout of components of a vehicle body lower part and to enhance the external appearance of the vehicle body lower part.

FIG. 3 illustrates perspective views depicting the layout and structure of the exhaust system 62. FIG. 3A illustrates positional relation between a lower part of the body frame 11 and the exhaust system 61, and FIG. 3B illustrates the structure of the exhaust system 62.

As depicted in FIGS. 3A and 3B, the exhaust system 62 is composed of a left exhaust system 62L and a right exhaust system 62R which are provided as a left-right pair. Each of the left exhaust system 62L and the right exhaust system 62R includes the exhaust pipes 81, and the mufflers 82 connected to rear end portions of the exhaust pipes 81.

The exhaust pipe 81 includes a front part exhaust pipe 81F connected to the cylinder head 56 (see FIG. 1), and a rear part exhaust pipe 81R connected to the muffler 82. The collecting part 83 is disposed between the front part exhaust pipe 81F and the rear part exhaust pipe 81R.

The front part exhaust pipe 81F is composed of the inside front part exhaust pipe 84 disposed on a transverse-directionally central side of the vehicle body, and the outside front part exhaust pipe 85 disposed on a transverse-directionally outer side of the inside front part exhaust pipe 84.

The front slant part 26a of the down frame 26 is passed between an upper portion of the inside front part exhaust pipe 84 and an upper portion of the outside front part exhaust pipe 85.

The rear part exhaust pipe 81R is composed of the inside rear part exhaust pipe 86 whose connection portion for connection with the collecting part 83 is disposed on a transverse-directionally central side of the vehicle body, and the outside rear part exhaust pipe 87 whose connection portion for connection with the collecting part 83 is disposed on a transverse-directionally outer side of the inside rear part exhaust pipe 86.

The mufflers 82 are composed of lower mufflers 91 connected to rear end portions of the inside rear part exhaust pipes 86, and upper mufflers 92 connected to rear end portions of the outside rear part exhaust pipes 87. The upper mufflers 92 are disposed on the upper side of the lower mufflers 91.

On the rear side of upper curved parts 26h provided in the left and right exhaust pipes 81, specifically, provided individually at upper portions of the inside front part exhaust pipes 84 and upper portions of the outside front part exhaust pipes 85, there are disposed front part cross pipes 28 extending in the transverse direction to interconnect the left and right front slant parts 26a.

The footrest brackets 94 support upper portions of the upper mufflers 92 on their rear end portions. Note that symbol 82a denotes a muffler attaching piece provided at an upper portion of the upper muffler 92 for the purpose of connecting the upper muffler 92 to the footrest bracket 94.

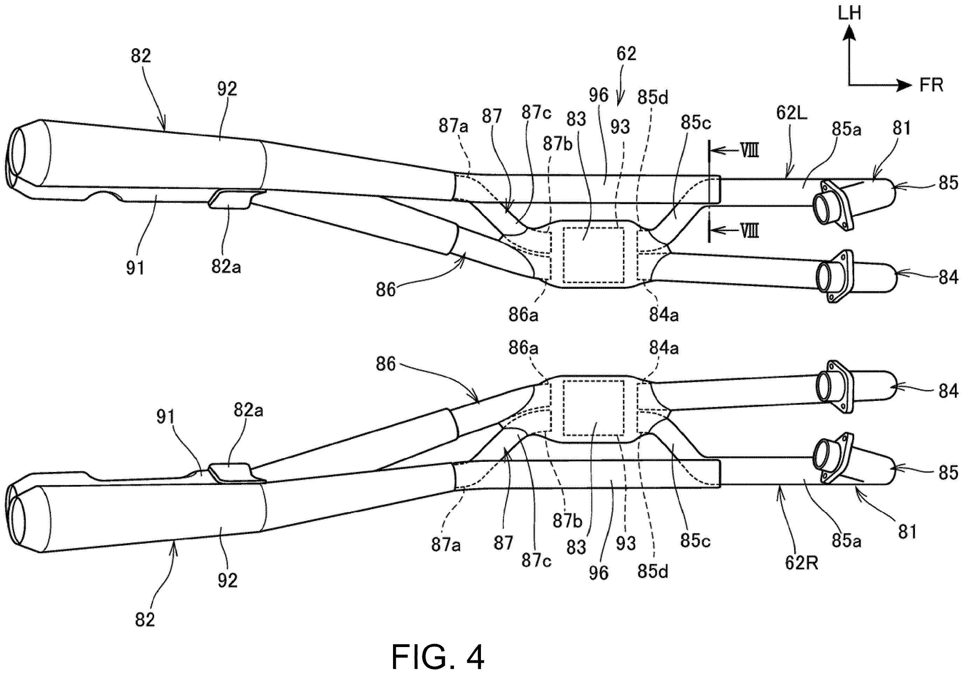

FIG. 4 is a plan view depicting the exhaust system 62.

The left exhaust system 62L and the right exhaust system 62R are perfectly independently provided on the left and right sides, and are in left-right symmetry in configuration. In the following, only the left exhaust system 62L will be described.

The left exhaust system 62L includes the exhaust pipes 81, the mufflers 82, the collecting part 83 connected to the exhaust pipes 81, and the protector 96 attached to the exhaust pipes 81 in such a manner as to cover the collecting part 83 from a transverse-directionally outer side.

The exhaust pipes 81 consist of the inside front part exhaust pipe 84, the outside front part exhaust pipe 85, the inside rear part exhaust pipe 86, and the outside rear part exhaust pipe 87. The mufflers 82 consist of the lower muffler 91 and the upper muffler 92. The collecting part 83 is connected to respective rear end portions 84a and 85d of the inside front part exhaust pipe 84 and the outside front part exhaust pipe 85 and to respective front end portions 86a and 87b of the inside rear part exhaust pipe 86 and the outside rear part exhaust pipe 87. The catalyst device 93 is incorporated in the collecting part 83. The catalyst device 93 has a catalyst supported on a carrier provided therein with numerous exhaust passages through which an exhaust gas flows, and functions to remove HC, CO, and NOx contained in the exhaust gas, thereby clarifying the exhaust gas.

In plan view, the inside front part exhaust pipe 84 extends substantially rectilinearly in the longitudinal vehicle direction, at least the front end portion 86a of the inside rear part exhaust pipe 86 is disposed on an extension line of the inside front part exhaust pipe 84, and the collecting part 83 is connected to the rear end portion 84a of the inside front part exhaust pipe 84 and the front end portion 86a of the inside rear part exhaust pipe 86.

In addition, in plan view, the outside front part exhaust pipe 85 has its front portion 85a extending substantially rectilinearly in the longitudinal vehicle direction, and has its rear portion integrally formed with a curved part 85c which is curved toward the transverse-directionally inner side and to which the collecting part 83 is connected. The rear end portion 85d of the curved part 85c is connected to the collecting part 83.

Besides, the outside rear part exhaust pipe 87 is formed in an S shape as a whole, has its rear end portion 87a disposed on an extension line of the outside front part exhaust pipe 85, and has its front end portion 87b disposed on the transverse-directionally inner side as compared to its rear end portion 87a. A curved part 87c extending while being curved from the rear end portion 87a has its front end portion 87b connected to the collecting part 83.

The protector 96 extending substantially rectilinearly in plan view is attached to a front portion 85a (more specifically, that portion of the front portion 85a which is located forwardly of the curved part 85c) of the outside front part exhaust pipe 85 and the rear end portion 87a of the outside rear part exhaust pipe 87, in such a manner as to cover the curved parts 85c and 87c from an outer side.

The protector 96 is disposed on the transverse-directionally outer side of the collecting part 83 and the curved parts 85c and 87c in plan view. With the protector 96 provided in this manner, the outside front part exhaust pipe 85 can be visually observed as if it were extending rearward past a lower part of the vehicle body and connected to the upper muffler 92 when viewed from a lateral side of the vehicle body, as depicted in FIG. 2, and the curved parts 85c and 87c (see FIG. 4) can be hidden.

FIG. 5 illustrates positional relations between the body frame 11 and the exhaust system 62. FIG. 5A is a plan view, and FIG. 5B is a bottom view.

As depicted in FIGS. 5A and 5B, the left and right down frames 26 have their left and right front slant parts 26a interconnected by the front part cross pipe 28 extending in the transverse direction, and have their horizontal parts 26b interconnected by the rear part cross pipe 29 extending in the transverse direction. The pivot shaft 36 is disposed on the rear side of and in proximity to the rear part cross pipe 29.

In plan view, the inside front part exhaust pipes 84, the outside front part exhaust pipes 85, and the protectors 96 are disposed in such a manner as to extend in the longitudinal vehicle direction along the front slant parts 26a, the front curved parts 26g, and the horizontal parts 26b of the down frames 26.

In addition, the inside front part exhaust pipe 84 is disposed on the transverse-directionally inner side as compared to the down frame 26, whereas the outside front part exhaust pipe 85 is disposed on the transverse-directionally outer side as compared to the down frames 26. In other words, the inside front part exhaust pipe 84 and the outside front part exhaust pipe 85 are disposed in such a manner that the front slant part 26a, the front curved part 26g, and the horizontal part 26b of the down frame 26 are interposed therebetween.

The collecting part 83 is tubular in shape, is disposed with the centre axis of the tube extending in the longitudinal vehicle direction, and is disposed on the transverse-directionally inner side as compared to the horizontal part 26b of the down frame 26 in plan view. In addition, the collecting parts 83 are disposed forwardly of the rear part cross pipe 29, and the inside rear part exhaust pipes 86 and the outside rear part exhaust pipes 87 are disposed on the lower side of the rear part cross pipe 29.

The inside rear part exhaust pipes 86 and the outside rear part exhaust pipes 87 extend obliquely rearward and outward from the rear ends of the collecting parts 83.

Thus, the collecting parts 83 are located on the transverse-directionally inner sides of the left exhaust system 62L and the right exhaust system 62R, and their outer sides are each covered with the protector 96. Accordingly, the collecting parts 83 are each protected from the lateral side, and the comparatively large-sized collecting parts 83 are less liable to be visually observed from a lateral side, so that the external appearance can be enhanced.

The lower muffler 91 and the upper muffler 92 are curved such that their longitudinally intermediate portions project outward. The left and right lower mufflers 91 and the left and right upper mufflers 92 extend in such a manner that their transverse interval increases in going rearward. Since the lower muffler 91 and the upper muffler 92 are disposed to be aligned vertically, the projection amounts by which the lower muffler 91 and the upper muffler 92 project to a lateral side of the vehicle body can be made smaller, and, therefore, the vehicle width can be made smaller.

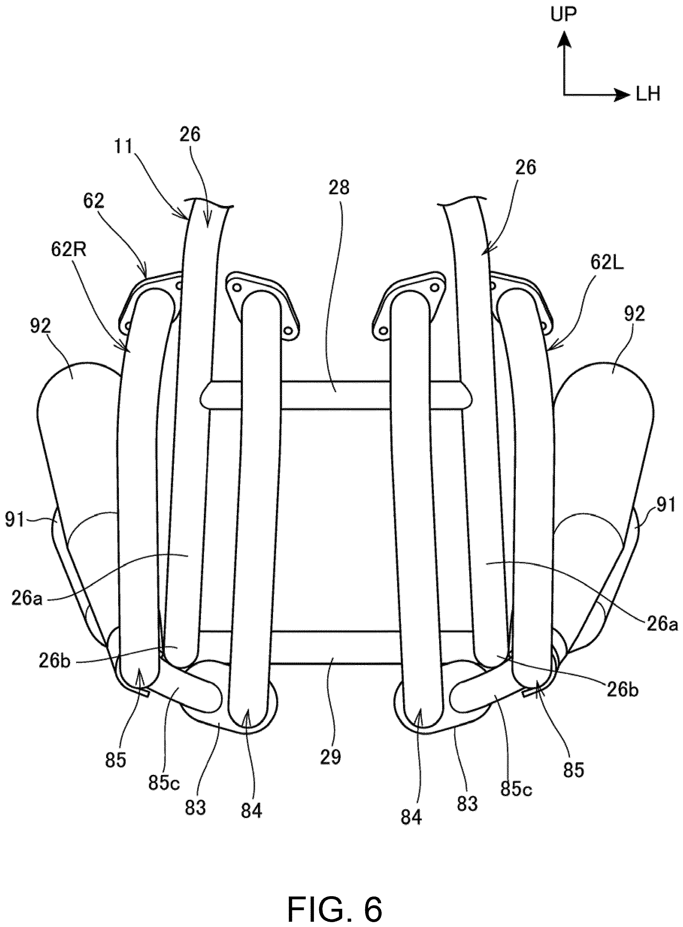

FIG. 6 is a front view depicting the body frame 11 and the exhaust system 62.

The inside front part exhaust pipe 84 and the outside front part exhaust pipe 85 extend vertically on both sides of a front portion of the down frame 26 along the front portion of the down frame 26 in front view.

The curved part 85c of the outside front part exhaust pipe 85 extends in such a manner as to be lower in going transverse-directionally inward, and is connected to the collecting part 83. In addition, the curved part 85c is disposed below the horizontal part 26b of the down frame 26.

The upper muffler 92 is disposed in such a manner that its portion on the transverse-directionally inner side overlaps with the outside front part exhaust pipe 85 in front view.

The collecting part 83 is disposed forwardly of the rear part cross pipe 29, and an upper portion of the collecting part 83 overlaps with the rear part cross pipe 29 in front view. This enables the collecting part 83 being large in outer shape to be disposed at a higher position, which enables the minimum road clearance of the collecting part 83 to be enlarged. Accordingly, the possibility of interference of the collecting part 83 with projections projecting from the road surface can be lowered.

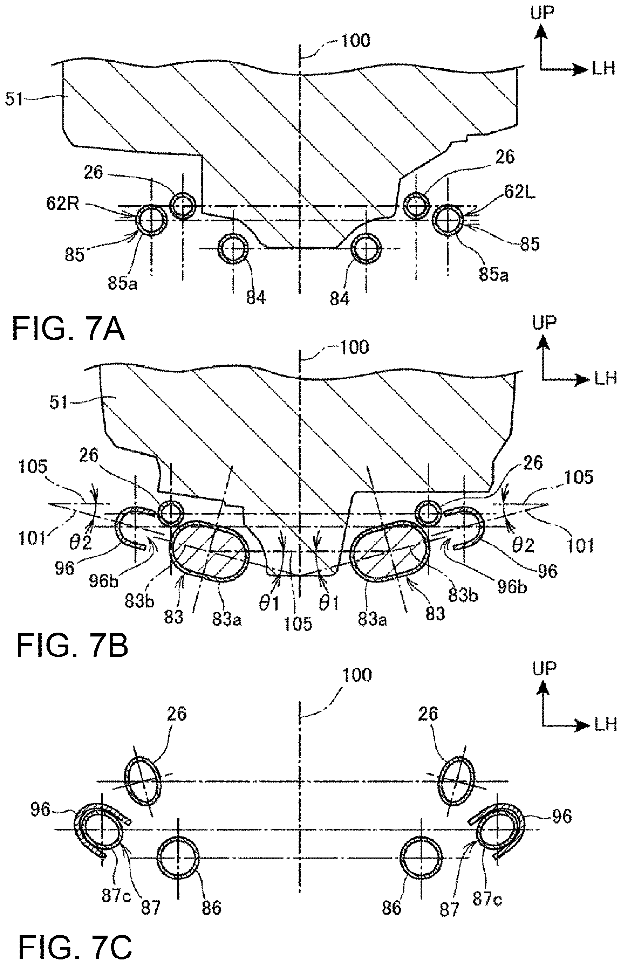

FIG. 7 illustrates sectional views depicting the exhaust system 62. FIG. 7A is a sectional view taken along line VA-VA of FIG. 5B, FIG. 7B is a sectional view taken along line VB-VB of FIG. 5B, and FIG. 7B is a sectional view taken along line VC-VC of FIG. 5B. Note that symbol 100 in the figures denotes a vehicle body centre line extending vertically while passing through the transverse-directional centre of the vehicle body.

As depicted in FIG. 7A, the left exhaust system 62L and the right exhaust system 62R are disposed in left-right symmetry about the vehicle body centre line 100.

The pair of left and right down frames 26 are disposed under the engine 51. Front portions of the inside front part exhaust pipes 84 are disposed on oblique transverse-directionally inner and lower sides of the down frames 26, and the front portions 85a of the outside front part exhaust pipes 85 are disposed on transverse-directionally outer sides of the down frames 26.

As depicted in FIG. 7B, the collecting parts 83 are disposed on the transverse-directionally inner sides of the down frames 26 (more specifically, on oblique transverse-directionally inner and lower sides of the down frames 26) in proximity to the down frames 26. In addition, the protectors 96 are disposed on the transverse-directionally outer sides of the down frames 26.

The collecting part 83 has a tubular portion 83a having a substantially laterally elongated oblong outer cross-sectional shape, with major axis 83b of the oblong shape inclined at an angle θ1 relative to a horizontal line 105, in such a manner as to be higher on the transverse-directionally outer side than on the transverse-directionally inner side. In addition, the lower end of the collecting part 83 is disposed at substantially the same height as the lower end of the engine 51.

The protector 96 is formed in a U shape in cross section, and is disposed on an oblique transverse-directionally outer and upper side of the collecting part 83, with its opening portion 96b oriented toward the collecting part 83.

As illustrated in FIG. 7B, the curved part 87c and the protector 96 are disposed on the transverse-directionally outer side of the down frame 26, specifically, on an oblique transverse-directionally outer and lower side of the down frame 26. The inside rear part exhaust pipe 86 is disposed on the lower side of the down frame 26, specifically, on an oblique transverse-directionally inner and lower side of the down frame 26.

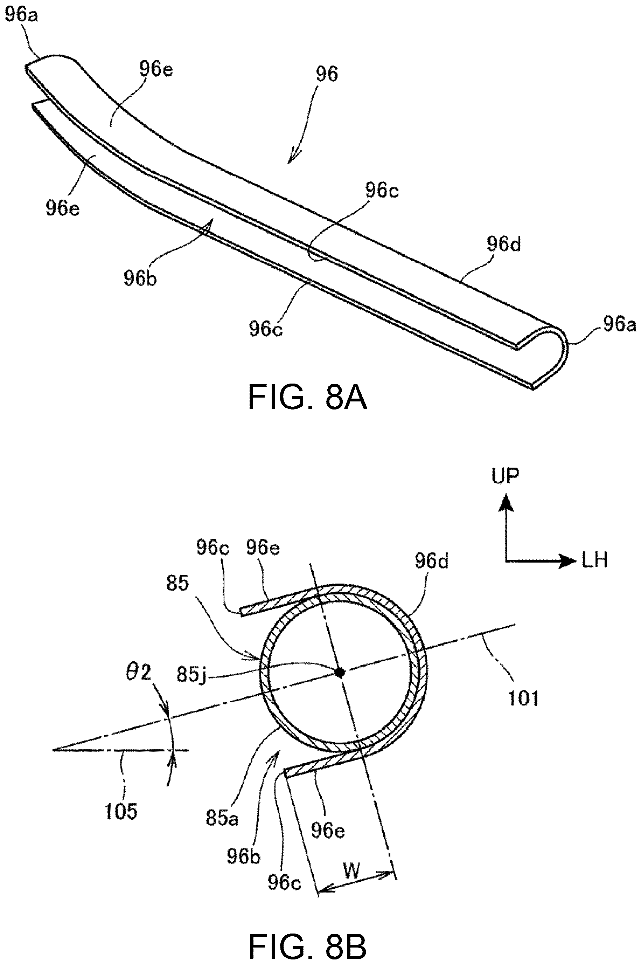

FIG. 8 illustrates the protector 96. FIG. 8A is a perspective view of the protector 96, and FIG. 8B is a sectional view taken along line VIII-VIII of FIG. 4.

As depicted in FIG. 8A, the protector 96 is a member formed by bending a steel sheet into a U shape in cross section. Between end surfaces 96a on both sides of the protector 96, the opening portion 96b opening to the transverse-directionally inner side is formed, and upper and lower opening edge portions 96c of the opening portion 96b extend in parallel to each other substantially in the longitudinal vehicle direction.

In FIG. 4 and FIG. 8A, in order to attach the protector 96 to the outside front part exhaust pipe 85 and the outside rear part exhaust pipe 87, the end surface 96a on one side of the protector 96 and an outer circumferential surface of the outside front exhaust pipe 85 are welded to each other, and the end surface 96a on the other side of the protector 96 and an outer circumferential surface of the outside rear part exhaust pipe 87 are welded to each other.

As depicted in FIG. 8B, the protector 96 integrally includes a semi-circular part 96d formed to have a semi-circular cross-sectional shape such as to be set along the outer circumferential surface of the outside front part exhaust pipe 85 consisting of a round pipe, and flat plate parts 96e extending in parallel to each other from an upper end portion and a lower end portion of the semi-circular part 96d.

The semi-circular part 96d has its inner surface in contact with or in proximity to the outside front part exhaust pipe 85. The flat plate part 96e is sized such that a width W from the end portion of the semi-circular part 96d to the opening edge portion 96c is about one half the outside diameter of the outside front part exhaust pipe 85.

A protector centre line 101 which passes through an axis 85j passing through the centre of the cross section of the outside front part exhaust pipe 85 and which is parallel to the pair of flat plate parts 96e is inclined relative to the horizontal line 105 at an angle θ2 such as to be higher on the transverse-directionally outer side than on the transverse-directionally inner side.

Returning to FIG. 7B, the angle θ2 of the protector centre line 101 of the protector 96 is substantially equal to the angle θ1 of the major axis 83b of the collecting part 83; in other words, the protector centre line 101 and the major axis 83b are substantially parallel to each other, and they are proximate to each other. In addition, the opening portion 96b of the protector 96 is substantially oriented toward the collecting part 83. This ensures that the protector 96 covers an oblique outer and upper side of the collecting part 83. Therefore, when the lower side of the engine 51 is viewed obliquely downward from a lateral side of the vehicle body, the collecting part 83 is hidden behind the protector 96 so as to be seen with difficulty. This contributes to an enhanced external appearance.

As has been illustrated in FIGS. 1, 2, and 4, the motorcycle 10 as a saddle-type vehicle in which the exhaust pipes 81 extending from the exhaust ports of the engine 51 as a multi-cylinder engine pass on the lower side of the vehicle body and are connected to the mufflers 82 has a vehicle body lower part structure wherein the number of the exhaust pipes 81 connected to the exhaust ports (specifically, the inside front part exhaust pipes 84 and the outside front part exhaust pipes 85) is four, and the collecting parts 83 where the two left ones or the two right ones of the exhaust pipes 81 collect are provided on the left side and the right side, respectively, with the catalyst device 93 being disposed in each of the collecting parts 83. The pair of down frames 26 is provided which separately extend to the left and right sides from the head pipe 21 and extend downward. The two left ones and the two right ones of the exhaust pipes 81 (specifically, the inside front part exhaust pipes 84 and the outside front part exhaust pipes 85) are provided in such a manner that the pair of left and right down frames 26 are each interposed between the two exhaust pipes 81 in plan view. The collecting parts 83 are disposed on transverse-directionally inner sides as compared to the pair of left and right down frames 26, and the exhaust pipes 81 (specifically, the outside front part exhaust pipes 85 and the outside rear part exhaust pipes 87) located on the outer sides of the down frames 26 are provided with the curved parts 85c and 87c of which only connection portions for connection with the collecting parts 83 are curved toward the transverse-directionally inner sides. The protectors 96 are provided in such a manner as to cover the curved parts 85c and 87c from a lateral side.

According to this configuration, a collecting part where all the exhaust pipes collect is abolished, and, instead, the collecting parts 83 are provided individually on the left and right sides, with the catalyst device 93 disposed in each of the collecting parts 83. As a result, the degree of freedom in designing a layout of the collecting parts 83 in the vehicle body lower part can be enhanced. At the same time, with the collecting parts 83 disposed on the transverse-directionally inner sides of the down frames 26, the collecting parts 83 can be protected and can be disposed to be less visible. Besides, with the curved parts 85c and 87c covered by the protectors 96 from a lateral side, further protection of the collecting parts 83 in the vehicle body lower part and further enhancement of the external appearance of the vehicle body lower part can be realised.

An exhaust system according to the related art, even where collecting parts are provided individually on the left and right sides, has an integral structure wherein exhaust pipes on the downstream side of each collecting part are further collected to form a rear part collecting part, and exhaust pipes are separately extended to the left and right sides from the rear part collecting part, and mufflers are connected individually to the separately extended exhaust pipes.

On the other hand, in the exhaust system 62 according to the present embodiment, the left and right collecting parts 83 are provided in the left exhaust system 62L and the right exhaust system 62R which are independently provided on the left and right sides. With such a left-right independent structure, it is possible to increase the degree of freedom in layout of the collecting parts 83 as compared to the related art. Further, the left exhaust system 62L and the right exhaust system 62R each become smaller in size and weight, and can therefore by handled easily, so that an operation of connecting them to the engine 51 and an operation of assembling them to the vehicle body are facilitated, leading to an enhanced productivity.

In addition, as depicted in FIG. 4 and 8, the protector 96 has a shape along the outer circumferential surface shapes of the exhaust pipes 81 (specifically, the outside front part exhaust pipe 85 and the outside rear part exhaust pipe 87) located on the outer side of the down frame 26. Besides, the protector 96 is provided in such a manner as to communicate with the curved parts 85c and 87c located on the front and rear sides of the collecting part 83, and to interconnect the exhaust pipes 81 (specifically, the front portion 85a of the outside front part exhaust pipe 85 and the rear end portion 87a of the outside rear part exhaust pipe 87) in the vicinity of the curved parts 85c and 87c. Therefore, the curved parts 85c and 87c connected while being curved to the collecting part 83 can be covered with the protector 96 in such a manner that this part appears as if there were an exhaust pipe continuously extending in the longitudinal vehicle direction. In addition, the curved parts 85c and 87c and the collecting part 83 located on the inner side of the protector 96 can be covered, which can contribute to an enhanced external appearance.

Besides, as depicted in FIGS. 1, 2, and 3, the down frames 26 are provided with the rear slant parts 26c as a pair of left and right riser parts rising toward the seat rails 24, and the pivot plates 27 as plate-shaped parts raised upward are provided at lower portions of the rear slant parts 26c. Therefore, component parts (for example, the chain 68 for transmitting power from the transmission 58 to the rear wheel 17, the master cylinder 78 for front wheel brake and the like) located on the transverse-directionally inner sides of the pair of left and right pivot plates 27 can be covered with the pivot plates 27, whereby external appearance can be enhanced.

In addition, as illustrated in FIGS. 1 and 2, the pivot shaft 36 of the swing arm 14 for supporting the rear wheel 17 is provided on the pivot plates 27. Therefore, the pivot plates 27 are provided on the down frames 26, to form high-rigidity parts, and the rear wheel 17 can be supported by the high-rigidity parts through the swing arm 14. As a result, running performance of the vehicle can be enhanced.

Besides, the rider's footrests 73 are provided on the pivot plates 27. Since the pivot plates 27 are plate-shaped parts, they are easy to process for providing the footrests 73, and the footrests 73 can be easily attached to them.

In addition, as depicted in FIGS. 3A, 3B, and 4, the two exhaust pipes 81 (specifically, the inside rear part exhaust pipe 86 and the outside rear part exhaust pipe 87) are connected to each of the rear portions of the pair of left and right collecting parts 83, and the mufflers 82 (specifically, the lower muffler 91 and the upper muffler 92) are connected individually to the two exhaust pipes, namely, the inside rear part exhaust pipe 86 and the outside rear part exhaust pipe 87. The lower muffler 91 and the upper muffler 92 are disposed in the state of being aligned vertically. Therefore, a total of four mufflers, namely, the lower mufflers 91 and the upper mufflers 92 on the left and right sides can be laid out efficiently on the vehicle body through the collecting parts 83.

For instance, if one muffler is disposed on each of the left and right sides as in the related art, the mufflers would be large in outer shape, so that the mufflers would protrude to lateral sides of the vehicle body, enlarging the vehicle width. In the present embodiment, on the other hand, the lower muffler 91 and the upper muffler 92 are disposed on the upper and lower sides, whereby a smaller vehicle width can be realised.

Besides, as depicted in FIG. 7B, the collecting part 83 is formed in an oblong outer cross-sectional shape, and the major axis 83b of the oblong shape is inclined relative to the horizontal in such a manner as to be higher on the transverse-directionally outer side than on the transverse-directionally inner side. Therefore, with the collecting part 83 oblong in cross section, the catalyst device 93 can be enlarged while restricting the vertical size of the collecting part 83. As a result, the minimum road clearance of the vehicle can be secured, and exhaust gas clarification performance can be enhanced. Further, since the major axis 83b of the collecting part 83 is inclined, the collecting part 83 can be made inconspicuous when the vehicle body lower part is viewed from an oblique lateral and upper side of the vehicle body.

In addition, the protector 96 is formed in a U shape in cross section, and is disposed on an extension line of the major axis 83b of the collecting part 83, with the opening portion 96b of the protector 96 oriented toward the collecting part 83. Therefore, with the protector 96 disposed on the extension line of the major axis 83b of the collecting part 83, the collecting part 83 is hidden more securely behind the protector 96 when the vehicle body lower part is viewed from an oblique lateral and upper side of the vehicle body, whereby external appearance can be enhanced.

The above-described embodiment merely shows one mode for carrying out the present invention, and arbitrary modifications and applications are possible without departing from the scope of the gist of the invention.

For instance, while the outer shape of the collecting part 83 has been an oblong cross-sectional shape which is substantially horizontally elongated (namely, with the major axis not horizontal) as depicted in FIG. 7B in the above embodiment, this configuration is not limitative. The outer shape may be an oblong cross-sectional shape which is horizontally elongated (namely, with the major axis horizontal). Alternatively, the outer shape of the collecting part may be an elliptic or rectangular cross-sectional shape which is horizontally elongated or substantially horizontally elongated, or may be a shape resembling an oblong, elliptic, or rectangular cross-sectional shape which is horizontally elongated or substantially horizontally elongated.

In addition, while the driver's footrests 73 have been provided on the pivot plates 27 as depicted in FIG. 1, this is not restrictive. The pivot plates may be elongated in the longitudinal vehicle direction, and passenger's footrests may be provided thereon, or both the driver's footrests and the passenger's footrests may be provided thereon.

The present invention is applicable not only to the motorcycles 10 but also to saddle-type vehicles other than the motorcycles 10. Note that the saddle-type vehicles generally include vehicles of the type in which the rider rides astride a vehicle body; thus, the saddle-type vehicles include not only the motorcycles (inclusive of motorbikes) but also those three-wheel vehicles and four-wheel vehicles which are classified as all-terrain vehicles (ATVs).

### Main reference symbols

10 Motorcycle (saddle-type vehicle)
14 Swing arm
17 Rear wheel
21 Head pipe
24 Seat rail
26 Down frame
26c Rear slant part (riser part)
27 Pivot plate (plate-shaped part)
36 Pivot shaft
51 Engine (multi-cylinder engine)
73 Footrest
81 Exhaust pipe
82 Muffler
83 Collecting part
84 Inside front part exhaust pipe (exhaust pipe)
85 Outside front part exhaust pipe (exhaust pipe)
85c Curved part
87c Curved part
91 Lower muffler (muffler)
92 Upper muffler (muffler)
93 Catalyst device
96 Protector

## Claims

1. A lower part structure for a saddle-type vehicle, having exhaust pipes (81) extending from exhaust ports of a multi-cylinder engine (51), each of the exhaust pipes (81) passing on a lower side of a vehicle body and connected to a muffler (82),
wherein the number of the exhaust pipes (81) connected to the exhaust ports is four, and collecting parts (83), where two left ones or two right ones of the exhaust pipes (81) collect, are provided respectively on left and right sides, and a catalyst device (93) is disposed in each of the collecting parts (83);
a pair of left and right down frames (26) are provided to separately extend to left and right sides from a head pipe (21) and extend downward;
the two left ones and the two right ones of the exhaust pipes (81) are provided in such a manner that the pair of left and right down frames (26) are each interposed between the two exhaust pipes (81) in plan view;
the collecting parts (83) are disposed on transverse-directionally inner sides as compared to the pair of left and right down frames (26), **characterised in that** the exhaust pipes (81) located on outer sides of the down frames (26) are formed with curved parts (85c, 87c) of which only portions connected to the collecting parts (83) are curved to transverse-directionally inner sides; and
protectors (96) are provided in such a manner as to cover the curved parts (85c, 87c) from lateral sides.

2. The lower part structure for a saddle-type vehicle according to claim 1, wherein the protector (96) has a shape along an outer circumferential surface shape of the exhaust pipe (81) located on an outer side of the down frame (26), and is provided in such a manner as to interconnect the exhaust pipes (81) communicating with the curved parts (85c, 87c) located on front and rear sides of the collecting part (83).

3. The lower part structure for a saddle-type vehicle according to claim 1 or 2, wherein the down frames (26) are provided with a pair of left and right riser parts (26c) rising toward seat rails (24), and plate-shaped parts (27) raised upward are provided at lower portions of the riser parts (26c).

4. The lower part structure for a saddle-type vehicle according to claim 3, wherein a pivot shaft (36) of a swing arm (14) supporting a rear wheel (17) is provided on the plate-shaped parts (27).

5. The lower part structure for a saddle-type vehicle according to claim 3 or 4, wherein the plate-shaped parts (27) are provided with rider's footrests (73).

6. The lower part structure for a saddle-type vehicle according to any one of claims 1 to 5, wherein the two exhaust pipes (81) are connected to a rear portion of each of the pair of left and right collecting parts (83), the mufflers (82) are connected individually to the two exhaust pipes (81), and the mufflers (82) are disposed in the state of being aligned in a vertical direction.

7. The lower part structure for a saddle-type vehicle according to any one of claims 1 to 6, wherein the collecting part (83) has an oblong outer cross-sectional shape, and a major axis (83b) of the oblong shape is inclined to be higher on a transverse-directionally outer side than on a transverse-directionally inner side.

8. The lower part structure for a saddle-type vehicle according to claim 7, wherein the protector (96) is formed to be U-shaped in cross section and is disposed on an extension line of the major axis (83b) of the collecting part (83), and an opening portion (96b) of the protector (96) is oriented toward the collecting part (83).

## Patentansprüche

1. Unterteilstruktur für ein Satteltypfahrzeug, mit Auspuffrohren (81), die sich von Abgasöffnungen eines Mehrzylindermotors (51) erstrecken, wobei jedes der Auspuffrohre (81) auf einer unteren Seite einer Fahrzeugkarosserie läuft und mit einem Schalldämpfer (82) verbunden ist,
bei der die Anzahl der Auspuffrohre (81), die mit den Abgasöffnungen verbunden sind, vier ist, und Sammelteile (83), bei denen zwei linke oder zwei rechte der Auspuffrohre (81) sammeln, entsprechend auf einer linken und rechten Seite vorgesehen sind, und eine Katalysatoreinrichtung (83) in jeder der Sammelteile (83) angeordnet ist;
ein Paar von linken und rechten Unterrahmen (26) vorgesehen sind, dass sie sich von einem Hauptrohr (21) getrennt zu der linken und rechten Seite erstecken und sich nach unten erstrecken;
die zwei linken und die zwei rechten der Auspuffrohre (81) auf solch eine Art und Weise vorgesehen sind, dass das Paar von linken und rechten Unterrahmen (26) in einer Draufsicht jeweils zwischen den zwei Auspuffrohren (81) angeordnet sind;
die Sammelteile (83) auf quer ausgerichteten Innenseiten verglichen mit dem Paar von rechten und linken Unterrahmen (26) angeordnet sind,
**dadurch gekennzeichnet, dass**
die Auspuffrohre (81), die sich auf Aussenseiten der Unterrahmen (26) befinden, mit gekrümmten Teilen (85c, 87c) ausgebildet sind, von denen nur Bereiche, die mit den Sammelteilen (83) verbunden sind, zu quer ausgerichteten Innenseiten gekrümmt sind;
Schutzvorrichtungen (96) auf solch eine Art und Weise vorgesehen sind, dass sie die gekrümmten Teile (85c, 87c) von lateralen Seiten bedecken.

2. Unterteilstruktur für ein Satteltypfahrzeug nach Anspruch 1, bei der die Schutzvorrichtung (96) eine Form entlang einer äußeren Umfangsflächenform des Auspuffrohres (81), das sich auf einer Außenseite des Unterrahmens (26) befindet, aufweist und auf solch eine Art und Weise vorgesehen ist, dass sie die Auspuffrohre (81), die mit den gekrümmten Teilen (85c, 87c) in Verbindung stehen, die sich auf einer Vorder- und Rückseite des Sammelteils (83) befinden, miteinander verbindet.

3. Unterteilstruktur für ein Satteltypfahrzeug nach Anspruch 1 oder 2, bei der die Unterrahmen (26) mit einem Paar von linken und rechten Steigrohrteilen (26c) versehen sind, die in Richtung zu Sitzschienen (24) ansteigen, und plattenförmige Teile (27), die sich nach oben erheben, sind an unteren Bereichen der Steigrohrteile (26c) vorgesehen.

4. Unterteilstruktur für ein Satteltypfahrzeug nach Anspruch 3, bei der ein Schwenkschaft (36) eines Schwingarms (14), der ein Hinterrad (17) stützt, auf den plattenförmigen Teilen (27) vorgesehen ist.

5. Unterteilstruktur für ein Satteltypfahrzeug nach Anspruch 3 oder 4, bei der die plattenförmigen Teile (27) mit Fahrerfußstützen (73) versehen sind.

6. Unterteilstruktur für ein Satteltypfahrzeug nach einem der Ansprüche 1 bis 5, bei der die zwei Auspuffrohre (81) mit einem hinteren Bereich jedes des Paares von linken und rechten Sammelteilen (83) verbunden sind, die Schalldämpfer (82) einzeln mit den zwei Auspuffrohren (81) verbunden sind, und die Schalldämpfer (82) in dem Zustand angeordnet sind, in dem sie in einer vertikalen Richtung ausgerichtet sind.

7. Unterteilstruktur für ein Satteltypfahrzeug nach einem der Ansprüche 1 bis 6, bei dem der Sammelteil (83) eine längliche Außenquerschnittsform aufweist, und eine Hauptachse (83b) der länglichen Form derart geneigt ist, dass sie auf einer quer ausgerichteten Außenseite höher ist als auf einer quer ausgerichteten Innenseite.

8. Unterteilstruktur für ein Satteltypfahrzeug nach Anspruch 7, bei der die Schutzvorrichtung (96) derart ausgebildet ist, dass sie in einem Querschnitt U-förmig ist, und auf einer Erstreckungslinie der Hauptachse (83b) des Sammelteils (83) angeordnet ist, und ein Öffnungsbereich (96b) der Schutzvorrichtung (96) in Richtung zu dem Sammelteil (83) ausgerichtet ist.

## Revendications

1. Structure de partie inférieure pour un véhicule de type à enfourcher, comportant des tuyaux d'échappement (81) s'étendant depuis des orifices d'échappement d'un moteur à cylindres multiples (51), chacun des tuyaux d'échappement (81) passant sur un côté inférieur d'un corps de véhicule et étant raccordé à un silencieux (82),
dans laquelle le nombre des tuyaux d'échappement (81) raccordés aux orifices d'échappement s'élève à quatre, et des parties de collecte (83), où deux gauches ou deux droits des tuyaux d'échappement (81) collectent, sont prévues respectivement sur des côtés gauche et droit, et un dispositif catalyseur (93) est disposé dans chacune des parties de collecte (83) ;
une paire de cadres inférieurs gauche et droit (26) est prévue pour s'étendre séparément des côtés gauche et droit depuis un tuyau de tête (21) et s'étendre vers le bas ;
les deux gauches et les deux droits des tuyaux d'échappement (81) sont prévus de telle manière que la paire des cadres inférieurs gauche et droit (26) soit chacune interposée entre les deux tuyaux d'échappement (81) dans une vue en plan ;
les parties de collecte (83) sont disposées sur des côtés intérieurs de direction transversale par rapport à la paire de cadres inférieurs gauche et droit (26), **caractérisée en ce que** les tuyaux d'échappement (81) situés sur des côtés extérieurs des cadres inférieurs (26) sont formés avec des parties courbées (85c, 87c) desquelles seules les portions raccordées aux parties de collecte (83) sont courbées vers des côtés intérieurs de direction transversale ; et
des dispositifs de protection (96) sont prévus de manière à couvrir les parties courbées (85c, 87c) des côtés latéraux.

2. Structure de partie inférieure pour un véhicule de type à enfourcher selon la revendication 1, dans laquelle le dispositif de protection (96) présente une forme le long d'une forme de surface circonférentielle extérieure du tuyau d'échappement (81) situé sur un côté extérieur du cadre inférieur (26), et est prévu de manière à raccorder ensemble les tuyaux d'échappement (81) communiquant avec les parties courbées (85c, 87c) situées sur des côtés avant et arrière de la partie de collecte (83).

3. Structure de partie inférieure pour un véhicule de type à enfourcher selon la revendication 1 ou 2, dans laquelle les cadres inférieurs (26) sont dotés d'une paire de parties montantes gauche et droite (26c) montant vers des rails de siège (24), et des parties en forme de plaque (27) relevées vers le haut sont prévues sur des portions inférieures des parties montantes (26c).

4. Structure de partie inférieure pour un véhicule de type à enfourcher selon la revendication 3, dans laquelle un arbre de pivotement (36) d'un bras oscillant (14) supportant une roue arrière (17) est prévu sur les parties en forme de plaque (27).

5. Structure de partie inférieure pour un véhicule de type à enfourcher selon la revendication 3 ou 4, dans laquelle les parties en forme de plaque (27) sont dotées de repose-pieds pour conducteur (73).

6. Structure de partie inférieure pour un véhicule de type à enfourcher selon l'une quelconque des revendications 1 à 5, dans laquelle les deux tuyaux d'échappement (81) sont raccordés à une portion arrière de chacune de la paire de parties de collecte gauche et droite (83), les silencieux (82) sont raccordés individuellement aux deux tuyaux d'échappement (81), et les silencieux (82) sont disposés dans l'état étant aligné dans une direction verticale.

7. Structure de partie inférieure pour un véhicule de type à enfourcher selon l'une quelconque des revendications 1 à 6, dans laquelle la partie de collecte (83) présente une forme de section transversale extérieure oblongue, et un axe majeur (83b) de la forme oblongue est incliné de sorte à être plus haut sur un côté extérieur de direction transversale que sur un côté intérieur de direction transversale.

8. Structure de partie inférieure pour un véhicule de type à enfourcher selon la revendication 7, dans laquelle le dispositif de protection (96) est formé de sorte à présenter une forme de U en section transversale et est disposé sur une ligne d'extension de l'axe majeur (83b) de la partie de collecte (83), et une portion d'ouverture (96b) du dispositif de protection (96) est orientée vers la partie de collecte (83).
